# EUROPÄISCHE PATENTANMELDUNG

(11) **EP 3 153 549 A1**
(43) Veröffentlichungstag der Anmeldung: **12.04.2017**
(21) Anmeldenummer: 15003103.7
(22) Anmeldetag: 30.10.2015
(51) Int. Cl.: C09C 1/36, C09D 7/00, C09D 7/12, C08K 3/22

(54) **HERSTELLUNG VON MATTEN LACKEN UND DRUCKFARBEN**

(71) Anmelder: Kronos International, Inc., 51373 Leverkusen (DE)
(72) Erfinder: Siekman, Janine, 51465 Bergisch Gladbach (DE); Kolmer-Anderl, Nicole, 40764 Langenfeld (DE); Sandrock, Martin, 45279 Essen (DE)

(57) **Zusammenfassung**

Die Erfindung richtet sich auf ein Verfahren zur Herstellung von pigmentierten matten Beschichtungen wie z.B. Lacke und Druckfarben, insbesondere von mit Titandioxid pigmentierten Beschichtungen. Das Verfahren zeichnet sich dadurch aus, dass agglomerierte Pigmentpartikel mit einer mittleren Agglomeratgröße von 2 bis 200 µm eingesetzt werden. Die Pigmentpartikel sind bevorzugt sprühagglomeriert.

Das erfindungsgemäße Verfahren weist gegenüber den üblichen Verfahren, bei denen zur Herstellung pigmentierter matter Beschichtungen zusätzlich Mattierungsmittel eingesetzt werden, mehrere Vorteile auf: Das Mattierungsmittel kann eingespart werden, dadurch ergibt sich eine Kostenersparnis, eine Verringerung der Prozessschritte und damit ein geringerer Zeitaufwand. Während des Dispergierprozesses tritt kein signifikanter Viskositätsanstieg auf.

## Beschreibung

### Gebiet der Erfindung

Die Erfindung richtet sich auf ein Verfahren zur Herstellung von pigmentierten matten Beschichtungen wie z. B. matten Lacken oder Druckfarben. Insbesondere betrifft die Erfindung mit Titandioxid pigmentierte matte Beschichtungen wie Lacke und Druckfarben.

### Technologischer Hintergrund der Erfindung

Die Mattierung einer Oberfläche wird durch eine gezielte Aufrauhung der Oberfläche im Mikrobereich bewirkt. Einfallendes Licht wird dadurch nicht mehr gerichtet, sondern diffus reflektiert. Höhe, Form und Anzahl der Oberflächenstrukturen bestimmen den Glanzgrad des Lackfilms oder der Druckfarbe.

Zur Erzielung einer matten Oberfläche werden der Lack- oder Druckfarbenzusammensetzung üblicherweise spezielle Mattierungsmittel zugesetzt. Die üblichen Mattierungsmittel sind sphärische Partikel mit einer Partikelgröße im Bereich von 1 bis etwa 20 µm in Abhängigkeit von der Filmschichtdicke. Als Mattierungsmittel finden in der Praxis vorwiegend gefällte oder pyrogene Kieselsäuren oder Kieselgele Verwendung, daneben auch Mattierungsmittel auf Basis von Duromeren, Wachsen oder Thermoplasten. Bekannt ist weiterhin die Eignung von Silikaten (Diatomeenerde, calcinierter Kaolin etc.), Calciumcarbonat und verschiedenen Arten von Hohlkugeln.

Beispielsweise offenbart EP 1 398 301 B1 Mattierungsmittel für Farben und Lacke basierend auf gefällten Kieselsäuren, die Partikelgrößen (d50) im Bereich von 5 bis 15 µm und eine spezifische Oberfläche (BET) von 350 bis 550 m²/g aufweisen. Optional sind die Kieselsäuren mit Wachs beschichtet.

DE 195 16 253 A1 offenbart Mattierungsmittel auf Basis von sprühgetrocknetem Kieselgel. Um eine ausreichende Stabilität der Aggregate zu gewährleisten, wird ein Bindemittel (Schichtsilikat, pyrogenes SiO₂ oder organisches Polymer) eingesetzt. Das Mattierungsmittel weist eine Partikelgröße von 1 bis 20 µm und ein spezifisches Porenvolumen von 0,4 bis 2,5 ml/g auf.

Schließlich offenbart DE 1 519 232 eine matte Beschichtung, die Pigmentagglomerate enthält, die durch Sprühtrocknung und abschließende Temperung von handelsüblichen Pigmenten zusammen mit Natriumsilikat als Bindemittel hergestellt werden. Die Agglomerate weisen einen Durchmesser von 2 bis 70 µm auf.

Die Erfahrung hat gezeigt, dass der Mattierungseffekt mit der Dosierung des Mattierungsmittels steigt. Größere Partikel haben eine höhere Mattierungswirkung, führen aber zu einer weniger glatten Oberfläche. Desweiteren führen sowohl höhere Gehalte an Mattierungsmittel wie auch eine längere Dispergierzeit zu steigenden Viskositäten und damit zu Verarbeitungsproblemen.

Desweiteren sind die bekannten Mattierungsmittel wegen starker Staubneigung schwierig zu handhaben und überdies häufig teurer als Pigmente wie beispielsweise Titandioxid.

Es besteht der Bedarf für ein alternatives Verfahren zur Herstellung pigmentierter matter Beschichtungen, das die Nachteile der bekannten Verfahren weitgehend vermeidet.

### Aufgabenstellung und Kurzbeschreibung der Erfindung

Der Erfindung liegt die Aufgabe zugrunde, ein alternatives Verfahren zur Herstellung pigmentierter matter Beschichtungen anzugeben.

Die Aufgabe wird gelöst durch ein Verfahren zur Herstellung von pigmentierten matten Beschichtungen wie Lacken und Druckfarben dadurch gekennzeichnet, dass Agglomerate von Pigmentpartikeln eingesetzt werden und die Agglomerate eine mittlere Agglomeratgröße d50 von 2 bis 200 µm bevorzugt 2 bis 100 µm insbesondere 2 bis 50 µm und insbesondere bevorzugt 2 bis 20 µm aufweisen.

Weitere vorteilhafte Ausformungen der Erfindung sind in den Unteransprüchen angegeben.

### Figuren

- Figur 1:: Rasterelektronenmikroskopaufnahme des erfindungsgemäßen Pigments gemäß Beispiel 2a.
- Figur 2:: Laserbeugungsanalyse der erfindungsgemäßen Pigmente gemäß Beispiel 1a, 2a, 3a.
- Figur 3:: Laserbeugungsanalyse der Pigmente gemäß Beispiel 1a und Vergleichsbeispiel 1.

### Beschreibung der Erfindung

Alle im Folgenden offenbarten Angaben bezüglich Größe in µm usw., Konzentration in Gew.-% oder Vol.-%, pH-Wert usw. sind so zu verstehen, dass alle Werte, die im Bereich der dem Fachmann bekannten jeweiligen Messgenauigkeit liegen, mit umfasst sind. Unter der mittleren Agglomerat- oder Partikelgröße wird im Rahmen der Erfindung der massebezogene Median d50 (im Folgenden: d50) verstanden.

Die Erfindung beruht auf der Verwendung einer Pigmentzusammensetzung in Beschichtungen wie Lacken, Farben und Druckfarben, welche sowohl als Mattierungsmittel als auch als Pigment fungiert, so dass der Einsatz eines zusätzlichen Mattierungsmittel zur Erzeugung mattierter Oberflächen entfallen kann.

Unter Pigment werden im Folgenden gemäß DIN 55 943 im Anwendungsmedium praktisch unlösliche anorganische oder organische Farbmittel verstanden, die in dem Anwendungsmedium weder chemisch noch physikalisch verändert werden und ihre partikuläre Struktur behalten. Sie werden zur Farbgebung eingesetzt, welche auf einer Interaktion der Pigmentpartikel mit dem sichtbaren Licht durch Absorption und Remission beruht. Pigmentpartikel weisen üblicherweise eine mittlere Partikelgröße (d50) im Bereich von 0,1 bis 1 µm auf.

Erfindungsgemäß kommen bevorzugt anorganische Pigmente, Weißpigmente wie beispielsweise Titandioxid und Buntpigmente wie beispielsweise Eisenoxide zum Einsatz. Besonders bevorzugt ist Titandioxid.

Die erfindungsgemäße Pigmentzusammensetzung enthält Agglomerate der Pigmentpartikel. In der fertigen Beschichtung liegt die Pigmentzusammensetzung sowohl in Form von Pigmentpartikel-Agglomeraten, die für die angestrebte Oberflächenrauigkeit sorgen, als auch in Form gut dispergierbarer Pigmentpartikel, die den klassischen Anforderungen an ein Pigment entsprechen, vor.

Pigmentpartikel weisen üblicherweise eine Partikelgröße von etwa 0,1 bis 1 µm auf. Titandioxidpigmente weisen üblicherweise eine mittlere Partikelgröße (d50) von 0,2 bis 0,5 µm auf. Um eine matte Oberfläche zu erzielen, muss wenigstens ein Teil der Partikel in einer größeren mittleren Partikelgröße (d50) von beispielsweise 2 bis 200 µm, bevorzugt 2 bis 100 insbesondere 2 bis 50 µm oder insbesondere bevorzugt 2 bis 20 µm vorliegen.

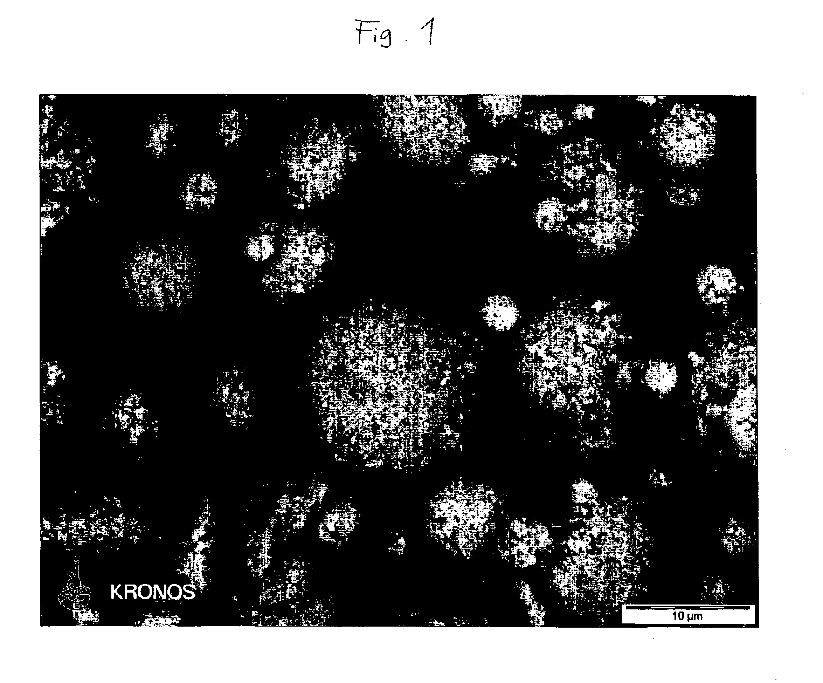

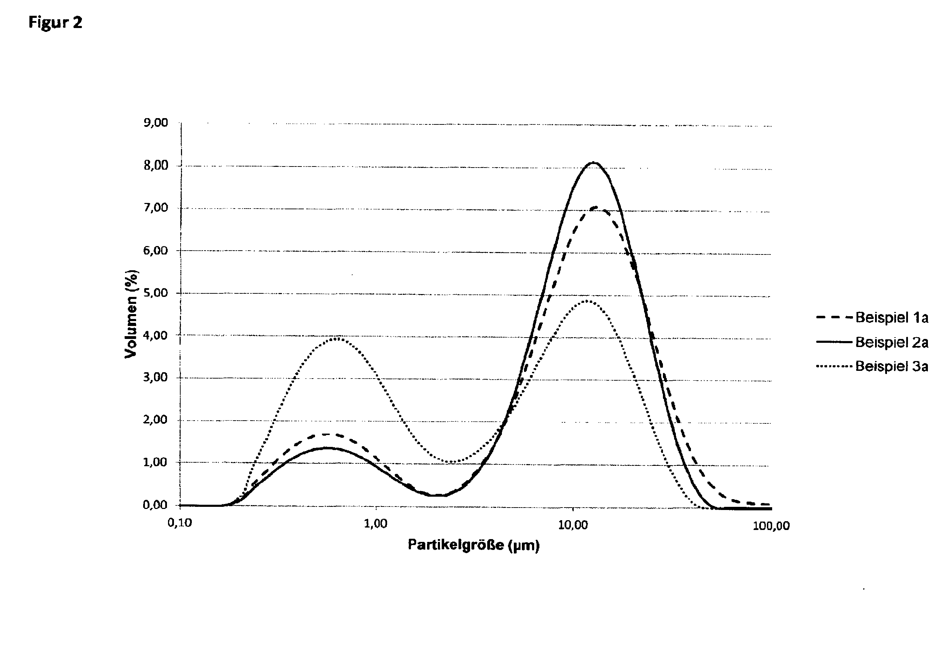

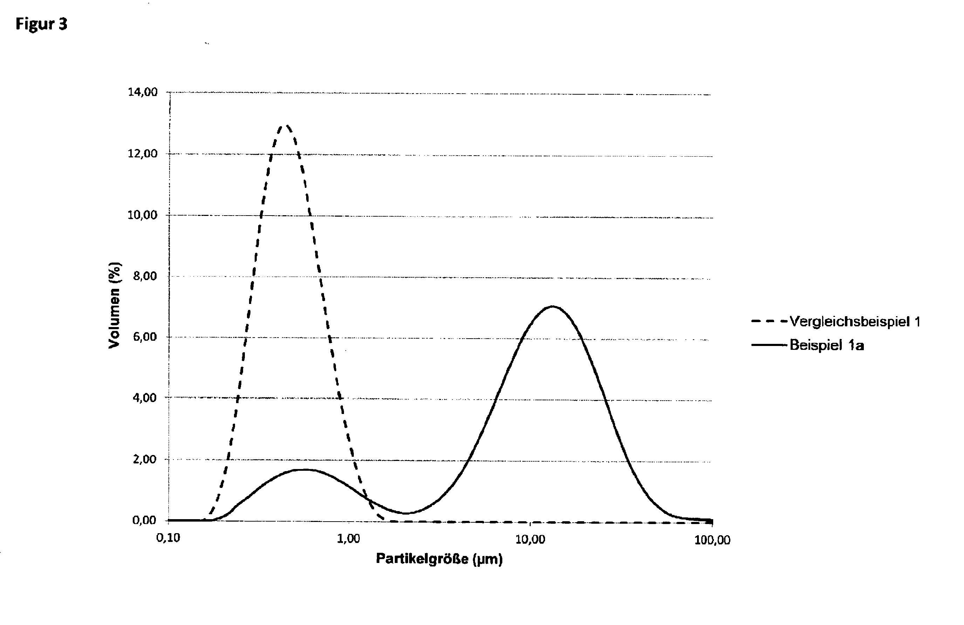

Figur 1 zeigt beispielhaft eine Rasterelektronenmikroskopaufnahme der erfindungsgemäß hergestellten Partikel gemäß Beispiel 2a. Figur 2 zeigt die mittels Laserbeugung gemessenen Partikelgrößenverteilungen der erfindungsgemäß hergestellten Partikel gemäß Beispiel 1a, 2a und 3a. Figur 3 zeigt beispielhaft die mittels Laserbeugung gemessene Partikelgrößenverteilung der erfindungsgemäß hergestellten Partikel gemäß Beispiel 1a im Vergleich zur Partikelgrößenverteilung eines kommerziellen Titandioxidpigments (Vergleichsbeispiel 1).

Erfindungsgemäß werden die größeren Partikel durch Agglomeration hergestellt, beispielsweise durch Sprühtrocknung.

Im Falle der Verwendung von Titandioxid können die Agglomerate sowohl aus dem fertigen Pigment als auch aus einem Zwischenprodukt der Titandioxidproduktion hergestellt werden. Unter dem fertigen Pigment wird das oberflächenbehandelte und mikronisierte Fertigpigment verstanden. Bei dem Zwischenprodukt kann es sich z.B. um unbehandeltes Titandioxid (sogenannter Titandioxid-Grundkörper, ohne Oberflächenbehandlung und ohne Mikronisierung) oder um oberflächenbehandeltes, jedoch nicht mikronisiertes Titandioxidpigment handeln. Die Agglomerierung erfolgt bevorzugt durch Sprühtrocknung der zu einer Suspension angeteigten Pigmentpartikel.

In einer besonderen Ausführung der Erfindung wird die Pigmentpartikel-Suspension vor der Agglomerierung dispergiert, beispielsweise in einer Rührwerkskugelmühle. Die Dispergierung kann in Wasser oder in einem organischen Lösemittel oder in einer Mischung von beidem stattfinden. Als organisches Lösemittelwie sind im Prinzip alle polar-protischen und polar-aprotischen Lösungsmittel geeignet. Beispielsweise sind Alkohole wie Isopropanol, n-Propanol, etc. sowie Aceton, Ethylacetat, Ethylmethylketon, THF oder DMSO geeignet. Darüber hinaus können auch kurzkettige Alkane wie Pentan oder Heptan eingesetzt werden. Desweiteren kann ein übliches Dispergiermittel zugegeben werden wie beispielsweise Tegomer DA 640. Der Fachmann ist mit den handelsüblichen Dispergiermitteln vertraut.

Die Pigmentpartikel-Suspension wird anschließend agglomeriert, vorzugsweise in einem Sprühtrockner. Die Prozessparameter bei der Trocknung werden so gewählt, dass möglichst kleine Agglomerate entstehen. Optional kann mittels eines mechanischen Trennverfahrens, z.B. eines Zyklons oder Windsichters ein engeres Größenverteilungsspektrum erzielt werden. Eine weitere Möglichkeit, die Agglomeratgröße zu verringern, ist die teilweise mechanische Zerkleinerung, z. B. über eine Prallmühle.

Des Weiteren sind im Prinzip auch andere übliche und dem Fachmann bekannte Trocknungsapparaturen geeignet, um Pigmentagglomerate nach der Erfindung herzustellen.

Die erfindungsgemäßen Pigmentagglomerate weisen eine Partikelgröße (Median d50) von 2 bis 200 µm bevorzugt 2 bis 100 µm, insbesondere 2 bis 50 µm und insbesondere bevorzugt 2 bis 20 µm auf.

Die erfindungsgemäßen Pigmentagglomerate weisen bevorzugt eine spezifische Oberfläche (BET) von etwa 10 bis 30 m²/g, bevorzugt 11 bis 25 m²/g und insbesondere 13 bis 20 m²/g und/oder einen Wert der Ölabsorption (gemessen nach DIN ISO 787 Teil 5) zwischen etwa 15 und 25 g/100g, bevorzugt zwischen etwa 17 und 22 g/100g auf.

Die erfindungsgemäßen Pigmentagglomerate werden zur Erzielung einer pigmentierten matten Oberfläche von Beschichtungen, beispielsweise von Lacken und Farben insbesondere Druckfarben verwendet. Während im Verlaufe des Dispergierprozesses von Beschichtungsformulierungen, die handelsübliche Mattierungsmittel (beispielsweise Kieselsäure-haltige Mattierungsmittel) enthalten, die Viskosität infolge der Aufmahlung der Mattierungsmittel signifikant ansteigt, ist dies bei dem erfindungsgemäßen Verfahren nicht der Fall. Stattdessen entstehen erfindungsgemäß bei der Herstellung der Beschichtungen während des Dispergierprozesses einzelne gut dispergierbare Pigmentpartikel, die für die gewünschten optischen Eigenschaften sorgen und die Viskosität nicht signifikant nachteilig beeinflussen. Andererseits verbleiben Pigmentagglomerate geeigneter Größe, die nicht zerfallen und für die gewünschte Oberflächenrauhigkeit sorgen.

Das erfindungsgemäße Verfahren zur Herstellung pigmentierter matter Beschichtungen wie Lacke und Druckfarben zeichnet sich gegenüber den bisherigen Verfahren, die zusätzliche Mattierungsmittel einsetzen, durch folgende Vorteile aus:
- Kostenreduktion durch Einsparung des Mattierungsmittels
- weniger Prozessschritte und deswegen geringerer Zeitaufwand
- geringerer Viskositätsanstieg während des Dispergierprozesses
- nur geringfügige Anpassung der Formulierung gegenüber glänzenden Lacken erforderlich wegen ähnlichen Viskositätsverhaltens

In einer weiteren Ausführung der Erfindung können als Pigmentzusammensetzungen auch Pigmentmischungen zum Einsatz kommen, in denen beispielsweise ein übliches Pigment, das glänzende Oberflächen liefert, gemischt ist mit Pigmentagglomeraten.

### Testmethoden

### Partikelgrößenverteilung und massebezogener Median d50

Die Partikelgrößenverteilung und der massebezogene Median d50 wurde mittels Laserbeugung mit dem Mastersizer 2000 der Fa. Malvern gemessen. Für die Messung wurde eine Suspension aus 80 mL Calgon-Lösung (0,06 % in destilliertem Wasser) mit 2 g des zu untersuchenden Partikelmaterials für 60 sec mit einem Ultraturrax-Rührer bei 9500 rpm dispergiert. Die Messung wurde bei folgenden Geräteeinstellungen durchgeführt: Brechnugsindex (n) Medium: 1,33, Brechnungsindex (n) Probe: 2,741 (rot) und 2,960 (blau), Absorptionsindex (k) Probe: 0,08 (rot) und 0,08 (blau), Laserabschattung: 0,8%.

### KE-Viskosität (Topfviskosität)

Die KE-Viskosität des frischen Lacks wurde mit einem Krebs-Stormer-Viskosimeter (KU-2 Viscosimeter) der Fa. Brookfield gemessen. Das Ergebnis wird in der Einheit Krebs angegeben.

### Ölabsorption

Es wird die Menge Leinöl bestimmt, die zur vollständigen Benetzung von 100 g des zu untersuchenden Partikelmaterials erforderlich ist. Die Durchführung der Methode erfolgt gemäß DIN ISO 787 Teil 5.

### Spezifische Oberfläche (BET)

Die BET-Oberfläche wird mit einem Tristar 3000 der Fa. Micromeritics nach dem statisch volumetrischen Prinzip gemessen.

### Beispiele

Die Erfindung wird anhand der folgenden Beispiele genauer beschrieben, ohne dass dadurch der Umfang der Erfindung eingeschränkt werden soll.

### Beispiel 1a

TiO₂-Pigment-Grundkörper wurde entsprechend der Nachbehandlungsvorschrift von Kronos 2066 nachbehandelt, filtriert, gewaschen, abgetrennt und getrocknet, jedoch nicht mikronisiert, und anschließend zu einer wässrigen Suspension mit 2,5 kg TiO₂ in 3,25 L Wasser erneut angeteigt. Die Suspension wurde in einer Rührwerkskugelmühle Labstar (0,4 - 0,6 mm SiLi-Beads) 16 min im Kreislaufverfahren mit einem spezifischen Energieeintrag von 0,2 kWh/kg dispergiert. Anschließend wurde die Suspension in einem Sprühtrockner (Büchi Mini-Sprühtrockner B-290) getrocknet.

Die Sprühtrockneragglomerate wiesen eine Partikelgröße d50 von 10 µm, eine spezifische Oberfläche (BET) von 16 m²/g und eine Ölabsorption von 20 g/100g auf.

### Beispiel 1 b

Mit dem sprühgetrockneten Pigment aus Beispiel 1a wurde ein wässriger Dispersionslack (Pigment-Volumen-Konzentration PVK 19%) nach folgender Vorschrift hergestellt: Zunächst wurde eine Vorlösung mit den Komponenten gemäß Tabelle 1 und mit Hilfe eines Dissolvers hergestellt. Anschließend wurden 192,50 g der Vormischung zusammen mit 57,50 g Titandioxidpigment (hier: sprühgetrocknetes Pigment gemäß Beispiel 1a) in einem Skandex-Mischer unter Zugabe von 50 g Glasperlen (SiLi-Beads Typ S) für eine Dauer von 30 Minuten gemischt.

**Tabelle 1: Vorlösung**

| | | |
|---|---|---|
| Wasser | | 38,50 g |
| Entschäumer | Agitan E255 | 1,00 g |
| Fungizid/Algizid | Actizid MBS | 0,50 g |
| Dispergiermittel | Dispex CX4320 | 2,50 g |
| Dispergiermittel | Edaplan 480 | 2,50 g |
| Verdicker | Rheolate 644 | 2,50 g |
| Bindemittel | Acronal LR9014 | 147.00 g |
| | Summe | 192,50 g |

An der frischen Lackmischung wurde die KE-Viskosität (Topfviskosität) bestimmt. Zur Bestimmung des Glanzes wurde ein Aufzug auf schwarz-weißem Kontrastkarton hergestellt und anschließend der Glanz (20°, 60° und 85°) mit einem Haze-Gloss Reflektometer der Fa. Byk-Gardner gemessen. Die gemessenen Daten sind in Tabelle 2 aufgeführt.

### Beispiel 2a

Wie Beispiel 1a mit dem einzigen Unterschied, dass zu der Suspension in der Rührwerkskugelmühle das Dispergiermittel Tegomer DA640 in einer Menge von 25 g zugegeben wurde.

Die Sprühtrockneragglomerate wiesen eine Partikelgröße d50 von 10 µm, eine spezifische Oberfläche (BET) von 13,8 m²/g und eine Ölabsorption von 19,6 g/100g auf.

### Beispiel 2b

Es wurde ein wässriger Dispersionslack wie in Beispiel 1 b hergestellt und die KE-Viskosität, sowie der Glanz (20°, 60°, 85°) wie in Beispiel 1 b bestimmt. Die gemessenen Daten sind in Tabelle 2 aufgeführt.

### Beispiel 3a

Wie Beispiel 2a mit dem Unterschied, dass das Pigment nicht in 3,25 L Wasser sondern in 3,25 L Ethanol/Ethylacetat (Verhältnis 1,6 : 1) erneut angeteigt wurde.

Die Sprühtrockneragglomerate wiesen eine Partikelgröße d50 von 4 µm, eine spezifische Oberfläche (BET) von 13,5 m²/g und eine Ölabsorption von 20 g/100g auf.

### Beispiel 3b

Es wurde ein wässriger Dispersionslack wie in Beispiel 1 b hergestellt und die KE-Viskosität sowie der Glanz (20°, 60°, 85°) wie in Beispiel 1b bestimmt. Die gemessenen Daten sind in Tabelle 2 aufgeführt.

### Vergleichsbeispiel 1

Vergleichsbeispiel 1 beinhaltet die Herstellung eines wässrigen Dispersionslacks wie in Beispiel 1 b beschrieben, wobei anstelle des sprühgetrockneten Pigments gemäß Beispiel 1a das kommerzielle Titandioxidpigment Kronos 2066 eingesetzt wurde. Es wurden die KE-Viskosität sowie der Glanz (20°, 60°, 85°) wie in Beispiel 1 b bestimmt. Die gemessenen Daten sind in Tabelle 2 aufgeführt.

### Vergleichsbeispiel 2

Wie Vergleichsbeispiel 1 mit dem Unterschied, dass in die Vorlösung (siehe Tab. 1) zusätzlich das kommerzielle Mattierungsmittel Acematt TS100 in einer Menge von 8,82 g (entsprechend 6 Gew.-% bezogen auf Bindemittel) gegeben wurde. Es wurden die KE-Viskosität sowie der Glanz (20°, 60°, 85°) wie in Beispiel 1b bestimmt. Die gemessenen Daten sind in Tabelle 2 aufgeführt.

### Vergleichsbeispiel 3

Wie Vergleichsbeispiel 2 mit dem Unterschied, dass als kommerzielles Mattierungsmittel Syloid W500 eingesetzt wurde. Es wurden die KE-Viskosität sowie der Glanz (20°, 60°, 85°) wie in Beispiel 1b bestimmt. Die gemessenen Daten sind in Tabelle 2 aufgeführt.

**Tabelle 2: Wässriger Dispersionslack**

| | **Glanz** | **Glanz** | **Glanz** | **KE-Viskosität** |
|---|---|---|---|---|
| | **20°** | **60°** | **85°** | **Krebs-Einhelt** |
| **Beispiel 1b** | 0 | 14 | 21 | 120 |
| **Beispiel 2b** | 0 | 10 | 12 | 119 |
| **Beispiel 3b** | 8 | 42 | 68 | 122 |
| **Vergleichsbeispiel 1** | 47 | 75 | 95 | 121 |
| **Vergleichsbeispiel 2** | 26 | 64 | 88 | 140 |
| **Vergleichsbeispiel 3** | 11 | 52 | 76 | 127 |

### Fazit

Die erfindungsgemäß hergestellten Lacke (Beisp. 1b, 2b, 3b) weisen gegenüber den Vergleichslacken, die mit kommerziellem Titandioxidpigment und zusätzlich 6 Gew.-% kommerziellem Mattierungsmittel hergestellt wurden (Vergleichsbeisp. 2, 3) einen höheren Mattierungsgrad (geringerer Glanz) und eine geringere Viskosität (KE-Viskosität) auf. Gegenüber dem mit kommerziellem Titandioxid hergestellten, glänzenden Lack (Vergleichsbeisp. 1) weisen die erfindungsgemäß hergestellten Mattlacke (Beisp. 1 b, 2b, 3b) keinen signifikanten Anstieg der Viskosität auf (KE-Viskosität).

## Patentansprüche

1. Verfahren zur Herstellung von pigmentierten matten Beschichtungen wie Lacken und Druckfarben **dadurch gekennzeichnet, dass** Agglomerate von Pigmentpartikeln eingesetzt werden und die Agglomerate eine mittlere Agglomeratgröße d50 von 2 bis 200 µm bevorzugt 2 bis 100 µm insbesondere 2 bis 50 µm und insbesondere bevorzugt 2 bis 20 µm aufweisen.

2. Verfahren nach Anspruch 1 **dadurch gekennzeichnet, dass** kein zusätzliches Mattierungsmittel eingesetzt wird.

3. Verfahren nach Anspruch 1 oder 2 **dadurch gekennzeichnet, dass** kein zusätzliches nicht-agglomeriertes Pigment eingesetzt wird.

4. Verfahren nach einem oder mehreren der Ansprüche 1 bis 3 **dadurch gekennzeichnet, dass** Agglomerate von Titandioxidpigmentpartikeln eingesetzt werden.

5. Verfahren nach einem oder mehreren der Ansprüche 1 bis 4 **dadurch gekennzeichnet, dass**
die Agglomerate mittels Sprühtrocknung einer Suspension von Pigmentpartikeln hergestellt wurden.

6. Verfahren nach einem oder mehreren der Ansprüche 1 bis 5 **dadurch gekennzeichnet, dass**
die Agglomerate eine spezifische Oberfläche (BET) von 10 bis 30 m²/g, bevorzugt 11 bis 25 m²/g und insbesondere 13 bis 20 m²/g auf weisen.

7. Verfahren nach einem oder mehreren der Ansprüche 1 bis 6 **dadurch gekennzeichnet, dass**
die Agglomerate einen Wert der Ölabsorption gemessen nach DIN ISO 787 Teil 5 zwischen etwa 15 und 25 g/100g, bevorzugt zwischen etwa 17 und 22 g/100g aufweisen.

8. Verfahren nach einem oder mehreren der Ansprüche 1 bis 7 **dadurch gekennzeichnet, dass**
die Pigmentpartikelsuspension zur Herstellung der Agglomerate vor der Agglomerierung dispergiert wird.

9. Verfahren nach Anspruch 8 **dadurch gekennzeichnet, dass**
die Pigmentpartikelsuspension in einer Rührwerkskugelmühle dispergiert wird.

10. Verfahren nach Anspruch 8 oder 9 **dadurch gekennzeichnet, dass**
die Pigmentpartikelsuspension Wasser und/oder mindestens ein organisches Lösemittel enthält.

11. Verfahren nach einem oder mehreren der Ansprüche 8 bis 10 **dadurch gekennzeichnet, dass**
der Pigmentpartikelsuspension ein Dispergiermittel zugesetzt wird.

12. Verfahren nach einem oder mehreren der Ansprüche 1 bis 11 **dadurch gekennzeichnet, dass**
die Pigmentpartikel in den Agglomeraten ausgewählt sind aus der Gruppe unbehandeltes Titandioxidpigment, nachbehandeltes nicht-mikronisiertes Titandioxidpigment und Titandioxid-Fertigpigment.

13. Verfahren nach einem oder mehreren der Ansprüche 1 bis 2 und 4 bis 12 **dadurch gekennzeichnet, dass**
die Agglomerate in Mischung mit Titandioxid-Fertigpigmentpartikeln verwendet werden.
